# EUROPÄISCHE PATENTSCHRIFT

(11) **EP 0 763 246 B1**
(45) Veröffentlichungstag und Bekanntmachung des Hinweises auf die Patenterteilung: **14.01.1998**
(21) Anmeldenummer: 95900549.7
(22) Anmeldetag: 24.11.1994
(51) Int. Cl.: H01F 27/28, H02K 3/14, H01B 7/30

(54) **DRILLEITER**
TWISTED CONDUCTOR
FIL TORSADE

(30) Priorität: 01.12.1993 AT 2433/93
(43) Veröffentlichungstag der Anmeldung: 19.03.1997
(73) Patentinhaber: ASTA ELEKTRODRAHT GmbH, 2755 Oed/Bezirk Wiener Neustadt (AT)
(72) Erfinder: PERGER, Paul, 2761 Miesenbach (AT); LEGENSTEIN, Johann, 2755 OED (AT)
(74) Vertreter: Rieberer, Stefan, Dipl.-Ing.
(86) Internationale Anmeldenummer: AT9400175
(87) Internationale Veröffentlichungsnummer: WO9515569

(56) Entgegenhaltungen:
- EP-A- 0 120 154
- WO-A-92/17891
- AT-A- 374 037
- CH-A- 118 816
- US-A- 1 904 162
- US-A- 2 978 530

## Beschreibung

Die Erfindung betrifft einen Drilleiter für Wicklungen elektrischer Maschinen und Geräte, insbesondere Transformatoren, der aus einzelnen lackisolierten Teilleitern zu einem rechteckigen Querschnitt zusammengesetzt ist, wobei die Einzelleiter an den beiden Flachseiten des Querschnitts im entgegengesetzten Sinne schräg verlaufen und an den Schmalseiten des Querschnitts durch eine Kröpfung von einer Seite auf die andere übertreten und die übereinander angeordneten Teilleiter im Querschnitt nebeneinander angeordnet sind.

Wie die WO-A-92/17891 zeigt, wurden bisher zur Herstellung von Drilleitern flache Teilleiter mit einem rechteckigen Querschnitt verwendet. Vor allem wurden diese Drilleiter als Wicklungsmaterial im Transformatorenbau eingesetzt. Ebenso wurden aber auch derartig verdrillte Wicklungsstäbe, sogenannte Röbelstäbe im Elektromaschinenbau verwendet.

Aus Gründen der Verlustminimierung geht die Tendenz der Berechner der Transformatoren in immer größere Querschnittsunterteilungen. Je kleiner die Querschnitte ausgeführt werden, desto besser können die Streufeldverluste minimiert werden.

Bei Flachdrähten als Teilleiter für einen Drilleiter ist aber ein Unterschreiten eines Breiten/Dickenverhältnisses von 2,5 : 1 praktisch ausgeschlossen.

Bei derartigen Dimensionen ist bei der maschinellen Herstellung eine Verdrehung der Teilleiter vor dem Drillkopf gegeben. Eine wirtschaftliche Herstellzeit und eine qualitativ hochstehendes Produkt kann nicht erreicht werden.

So ist aus der EP-A-0133 220 ein elektrischer Leiter bekannt, der eine annähernde Roebelcharakteristik aufweist und aus sechs oder mehr Einzelelementen, die blanke Kupferdrähte sein können, besteht und die ohne zentralen Kern verseilt sind. Nachteilig bei diesem elektrischen Leiter ist aber, daß er weder auf einer herkömmlichen Drilleitermaschine hergestellt werden kann, noch daß er die elektrischen Eigenschaften eines wirklichen Drillleiters aufweist.

Darüber hinaus ist aus der EP-A-0120154 ein weiterer elektrischer Leiter bekannt, der nach der Verseiltechnik hergestellt ist. Bei diesem Leiter wird der mittlere Leiterteil nicht nach der Verröbelungstechnik verändert und weist auch keine Kröpfungen auf. Es fehlen also auch bei diesem Leiter die elektrischen Eigenschaften des wirklichen Drilleiters. Ein weiterer Nachteil dieses Drilleiters ist, daß der annähernde Rechteckquerschnitt in einem nachträglichen Arbeitsschritt durchgeführt wird.

Aufgabe der Erfindung ist es daher, einen Drilleiter der eingangs zitierten Art zu schaffen, der einerseits die obigen Nachteile vermeidet und der anderseits wirtschaftlich und für den Elektrotechniker gute Eigenschaften aufweist und mit einer herkömmlichen Drilleitermaschine hergestellt werden kann.

Der erfindungsgemäße Drilleiter ist dadurch gekennzeichnet, daß als Teil leiter ein Runddraht vorgesehen ist, wobei die Runddraht-Teilleiter in einem Drillkopf zusammengeführt und mit einer rechteckigen Querschnittsform mit Kröpfungen versehen werden.

Mit dem erfindungsgemäßen Drilleiter ist es erstmals möglich, den Berechnern von Transformatoren die Gelegenheit zu geben, auch größte Querschnittsunterteilungen durchführen zu können. Ferner ist durch die Erfindung der weitere Vorteil gegeben, daß die Vormaterialbeschaffung kostengünstiger durchgeführt werden kann. Die Herstellung eines Flachdrahtes in kleinen Dimensionen ist unvergleichlich teurer als die Herstellung von Runddraht. So entfällt bei der Herstellung auch eine Bearbeitung im Walzwerk. Überdies kann der Runddraht schneller einer Lackierung unterzogen werden als der Flachdraht, da auf einen eventuellen Kantenradius nicht Rücksicht genommen werden muß.

Bei der Lackiereinrichtung kann auch eine einfachere Düsenkonfiguration gewählt werden.

Gemäß einer besonderen Ausgestaltung der Erfindung sind die Teilleiterstapeln im Abstand nebeneinander angeordnet und im Abstandsraum im Bereich der Kröpfung sind Zwischenstücke angeordnet, sodaß ein Kühlkanal für den Kühlmitteldurchtritt in radialer Richtung gegeben ist. Dadurch wird bei der Herstellung der Wicklung, die Wickelzeit reduziert, da das zeitraubende Einfügen von Distanzplättchen zur Bildung von Ölkanälen zwischen den Bindungen beim Wickelvorgang wegfällt. Nach einem weiteren Merkmal der Erfindung sind mindestens an einer Flachseite aus Isolierstoff bestehende Distanzstücke angeordnet. Das Anordnen dieser Distanzstücke im Zuge der Drilleiterherstellung ist einfach. Nach dem Drillkopf wird eine Einrichtung zur Beifügung der Distanzstücke vorgesehen. Die Produktionsgeschwindigkeit muß für diese Maßnahme nicht reduziert werden. Darüber hinaus ist auch der Abstand der Anordnung der Distanzstücke frei wählbar.

Nach einem weiteren besonderen Merkmal der Erfindung ist eine Umhüllung vorgesehen, die eine großmaschige, mit teilvernetzten Epoxidharz vorimprägnierte Glasgewebebandage ist. Um den Zusammenhalt des Leiterbündels zu gewährleisten und nach Wärmebehandlung die mechanische Stabilität des Drillleiters zu erhöhen, wird ein geeignetes Netzgeflecht vorgesehen, das einerseits die entprechend benötigte Zugfestigkeit besitzt, anderseits das Trafoöl möglichst ungehindert an den Bündelleitern vorbeiströmen läßt.

Gemäß einer weiteren Ausgestaltung der Erfindung ist die Umhüllung nur im Bereich der Kröpfung bzw. der Distanzstücke vorgesehen. Dadurch werden die bei Papierisolation auftretenden Aufpauschungen, die den Wickelspalt bzw. den Ölkanal verringern, sicher vermieden.

Gemäß einem weiteren Merkmal der Erfindung sind die Zwischenstücke bzw. die Distanzstücke zur Befestigung am Drilleiter auf mindestens einer Fläche mit Epoxidharz bestrichen bzw. weisen ein mit teilvernetzten Epoxidharz vorimprägniertes Glasfaserflies auf.

Die Erfindung wird an Hand von in der Zeichnung dargestellten Ausführungsbeispielen näher erläutert. Fig. 1 zeigt einen Querschnitt des Drilleiters, Fig. 2 eine Draufsicht auf die Flachseite eines Drilleiters und Fig. 3 eine Draufsicht auf die Schmalseite, Fig. 4 und 5 einen Drilleiter mit Kühlkanal und Fig. 6 und 7 einen Drilleiter mit seitlicher Distanzierung.

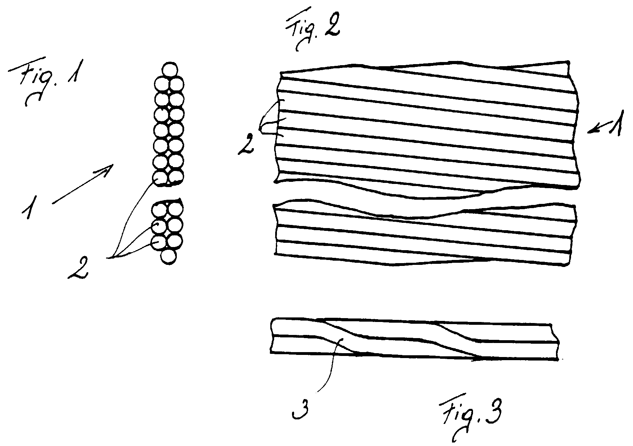

Gemäß der Fig. 1 ist der Drilleiter 1 mit seinen Teilleitern 2 dargestellt. Diese Teilleiter 2 sind Runddrähte.

Gemäß der Fig. 2 ist die Flachseite eines Drilleiters 1 dargestellt, wobei die aus Runddrähten bestehenden Teilleiter 2 übereinander angeordnet sind. Dabei ist es an sich bekannt, daß der aus Flachdrähten bestehende Drilleiter aus bis zu zirka 80 Teilleitern besteht. Bei der Verdrillung der Runddrähte zum Drilleiter, die maschinell erfolgt, wechselt aus den zwei Teilleiterstapeln jeweils der oberste und der unterste Teilleiter 2 in den anderen Teilleiterstapel über, wobei vorzugsweise die Teilleiter um jeweils die halbe Schrittlänge versetzt werden. Diese Verformung für das Übertreten des Teilleiters 2 von einem Teilleiterstapel in das andere Teilleiterstapel (Fig. 2) ist die Kröpfung 3. Nach der Kröpfung 3 der Teilleiter 2 verlaufen sie schräg.

Entsprechend der Fig. 3 weisen die Teilleiter 2 eine Kröpfung 3 auf, sodaß die beiden Teilleiterstapel zueinander parallel liegen.

Um das Zusammenhalten des Teilleiterbündels zu einem Drilleiter 1 zu gewährleisten, kann eine Umhüllung vorgesehen sein. Diese Umhüllung kann eine großmaschige mit teilvernetztem Epoxidharz vorimprägnierte Glasgewebebandage sein.

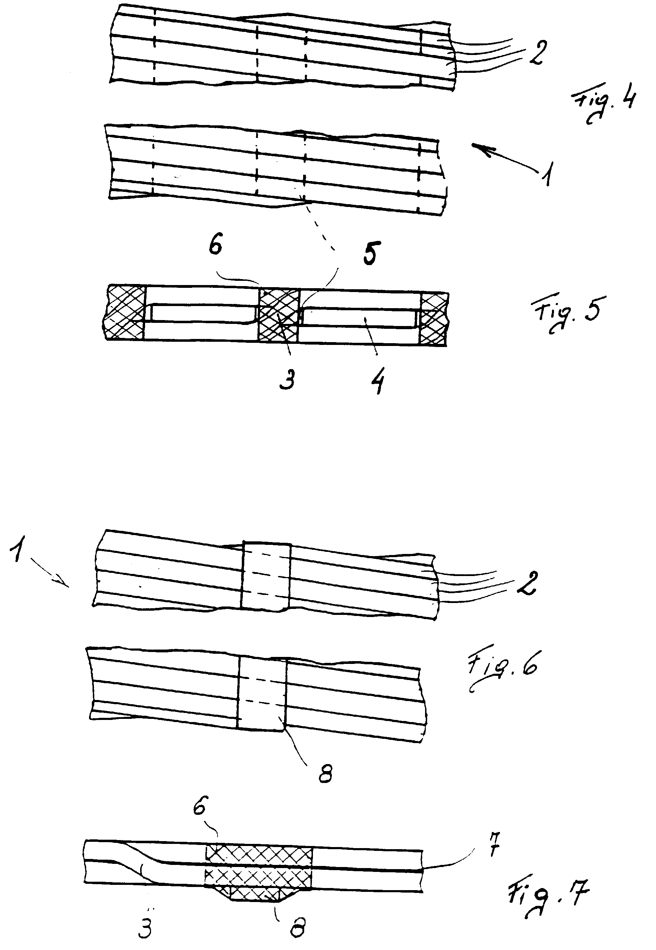

Entsprechend der Fig. 4 und 5 weisen die Teilleiter 2 eine stärkere Kröpfung 3 auf, sodaß die beiden Teilleiterstapel zueinander parallel liegen. In diesem Abstandsraum 4 ist im Bereich der Kröpfung 3 ein Zwischenstück 5 angeordnet. Es ergibt sich also für den Drilleiter 1 ein Kühlkanal für einen Kühlmitteldurchtritt in radialer Richtung.

Entsprechend der Fig 6 und 7 weisen die Teilleiter 2 eine Kröpfung 3 auf sodaß die beiden Teilleiterstapel zueinander parallel liegen. Zwischen den beiden Teilleiterstapeln ist eine Zwischenpreßspannlage 7 angeordnet. Mindestens an einer Flachseite des Drilleiters 1 sind aus Isolierstoff bestehende Distanzstücke 8 angeordnet.

Um das Zusammenhalten des Teilleiterbündels zu einem Drilleiter 1 zu gewährleisten, ist eine Umhüllung 6 vorgesehen. Diese Umhüllung 6 ist eine großmaschige mit teilvernetzten Epoxidharz vorimprägnierte Glasgewebebandage und ist im Bereich der Distanzstücke 8 angebracht. Natürlich könnte man auch den Drilleiter 1 kontinuierlich mit einer Glasgewebebandage umwickeln.

## Patentansprüche

1. Drilleiter für Wicklungen elektrischer Maschinen und Geräte, insbesondere Transformatoren, der aus einzelnen lackisolierten Teilleitern zu einem rechteckigen Querschnitt zusammengesetzt ist, wobei die Einzelleiter an den beiden Flachseiten des Querschnitts im entgegengesetzten Sinne schräg verlaufen und an den Schmalseiten des Querschnitts durch eine Kröpfung von einer Seite auf die andere übertreten und die übereinander angeordneten Teilleiter im Querschnitt nebeneinander angeordnet sind, dadurch gekennzeichnet daß als Teilleiter (2) ein Runddraht vorgesehen ist, wobei die Runddraht-Teilleiter (2) in einem Drillkopf zusammen geführt und mit einer rechteckigen Querschnittsform mit Kröpfungen (3) versehen werden.

2. Drilleiter nach Anspruch 1, dadurch gekennzeichnet, daß die Teilleiterstapeln im Abstand nebeneinander angeordnet sind und im Abstandsraum (4) im Bereich der Kröpfung (3) Zwischenstücke (5) angeordnet sind, sodaß ein Kühlkanal für den Kühlmitteldurchtritt in radialer Richtung gegeben ist.

3. Drilleiter nach Anspruch 1 oder 2, dadurch gekennzeichnet, daß mindestens an einer Flachseite aus Isolierstoff bestehende Distanzstücke (8) angeordnet sind.

4. Drilleiter nach einem der Ansprüche 1 bis 3, dadurch gekennzeichnet, daß eine Umhüllung (6) vorgesehen ist, eine großmaschige, mit teilvernetzten Epoxidharz vorimprägnierte Glasgewebebandage ist.

5. Drilleiter nach einem der Ansprüche 1 bis 4, dadurch gekennzeichnet, daß die Umhüllung (6) nur im Bereich der Kröpfung (3) bzw. der Distanzstücke (8) vorgesehen ist.

6. Drilleiter nach einem der Ansprüche 1 bis 5, dadurch gekennzeichnet, daß die Zwischenstücke (5) bzw. die Distanzstücke (8) zur Befestigung am Drilleiter auf mindestens einer Fläche mit Epoxidharz bestrichen sind, bzw. ein mit teilvernetzten Epoxidharz vorimprägniertes Glasfaserflies aufweisen.

## Claims

1. A twisted conductor for the windings of electrical machines and apparatus, especially transformers, which is obtained by grouping individual, varnish isolated, partial conductors, into a rectangular shape cross-section, with the individual conductors slantedly extending, on both flat long sides of said cross-section, according to opposite directions, and passing from one side to the other on both short sides of said cross-section, through a cranked region, and with the one above the other arranged partial conductors being side by side placed in said cross-section, characterized in that instead of partial conductor (2), a round wire is provided, with the round wire partial conductors (2) being brought together in a torsion head and provided with cranked regions (3) while forming a rectangular shape cross-section.

2. The twisted conductor as recited in claim 1, characterized in that partial conductor stackings are remotely side by side disposed, with partition parts (5) being disposed into the middle space (4) in said cranked region (3), so that a cooling channel for a cooling agent to pass is formed, in a radial direction.

3. The twisted conductor as recited in claim 1 or 2, characterized in that spacing parts (8) made from an isolating material are arranged on at least a flat long side.

4. The twisted conductor as recited in one of claims 1-3, characterized in that a cover (6) comprising a wide-meshed glass fabric ribbon which has been preimpregnated with a partly cross-linked resin is provided.

5. The twisted conductor as recited in one of claims 1-4, characterized in that said cover (6) is only provided in said cranked region (3) and/or spacing part (8) region.

6. The twisted conductor as recited in one of claims 1-5, characterized in that said partition parts (5) and/or spacing parts (8), with a view to attaching them to said twisted conductor, are coated with an epoxy resin on at least a surface thereof, or have a glass fiber felt which has been impregnated with a partly cross-linked epoxy resin.

## Revendications

1. Conducteur torsadé pour enroulements de machines et appareils électriques, notamment des transformateurs, qui est constitué par le regroupement de conducteurs partiels individuels, isolés au vernis, en une section transversale de forme rectangulaire, les conducteurs individuels s'étendant, sur les deux grands côtés plats de la section transversale, de manière inclinée selon des sens opposés, et passant d'un côté à l'autre sur les deux petits côtés de la section transversale, par l'intermédiaire une zone contre-coudée, et les conducteurs partiels disposés l'un sur l'autre étant disposés côte à côte dans la section transversale, **caractérisé** en ce qu'en guise de conducteur partiel (2) il est prévu un fil rond, les conducteurs partiels de fil rond (2) étant rassemblés dans une tête de torsion et pourvus de zones contre-coudées (3) en formant une section transversale de forme rectangulaire.

2. Conducteur torsadé selon la revendication 1, **caractérisé** en ce que les empilements de conducteurs partiels sont disposés à distance les uns a côté des autres, des pièces de séparation (5) étant disposées dans l'espace intermédiaire (4), dans la région de la zone contre-coudée (3), de sorte que l'on forme un canal de refroidissement pour le passage d'un agent de refroidissement, dans la direction radiale.

3. Conducteur torsadé selon la revendication 1 ou 2, **caractérisé** en ce que des pièces d'écartement (8) réalisées en un matériau isolant, sont disposées sur au moins un grand côté plat.

4. Conducteur torsadé selon l'une des revendications 1 à 3, **caractérisé** en ce qu'il est prévu une enveloppe (6) constituée par un bandage de tissu de verre à mailles larges, pré-imprégné par une résine époxy partiellement réticulée.

5. Conducteur torsadé selon l'une des revendications 1 à 4, **caractérisé** en ce que l'enveloppe (6) n'est prévue que dans la région de la zone contre-coudée (3) et/ou des pièces d'écartement (8).

6. Conducteur torsadé selon l'une des revendications 1 à 5, **caractérisé** en ce que les pièces de séparation (5) et/ou les pièces d'écartement (8), en vue de leur fixation au conducteur torsadé, sont enduites, sur au moins une surface, d'une résine époxy, ou présentent un feutre do fibres de verre pré-imprégné d'une résine époxy partiellement réticulée..
